# EUROPÄISCHE PATENTSCHRIFT

(11) **EP 0 626 082 B1**
(45) Veröffentlichungstag und Bekanntmachung des Hinweises auf die Patenterteilung: **03.01.1996**
(21) Anmeldenummer: 93903094.6
(22) Anmeldetag: 11.02.1993
(51) Int. Cl.: G05D 23/19

(54) **EINRICHTUNG ZUR STEUERUNG, REGELUNG UND ÜBERWACHUNG VON HEIZUNGSYSTEMEN**
DEVICE FOR CONTROLLING, REGULATING AND MONITORING HEATING SYSTEMS
INSTALLATION POUR LA COMMANDE, LA REGULATION ET LE CONTROLE DE SYSTEMES DE CHAUFFAGE

(30) Priorität: 11.02.1992 AT 227/92
(43) Veröffentlichungstag der Anmeldung: 30.11.1994
(73) Patentinhaber: Elin Energieanwendung Gesellschaft m.b.H., A-1140 Wien (AT)
(72) Erfinder: GRÖMER, Herbert, A-4150 Rohrbach (AT); ATZGERSTORFER, Kurt, A-4020 Linz (AT); SIMMET, Manfred, A-4050 Traun (AT); NIMMERVOLL, Raimund, A-4040 Linz (AT); FIMBERGER, Johanna, A-4231 Untergaisbach (AT); LEHNER, Andreas, A-4072 Alkoven (AT)
(74) Vertreter: Krause, Peter
(86) Internationale Anmeldenummer: AT9300017
(87) Internationale Veröffentlichungsnummer: WO9316426

(56) Entgegenhaltungen:
- EP-A- 0 221 618
- EP-A- 0 338 912
- DE-A- 3 335 226
- FR-A- 2 565 714
- FR-A- 2 592 730
- GB-A- 2 216 313
- US-A- 5 103 391
- CFP CHAUD FROID PLOMBERIE Bd. 45, Nr. 531, Dezember 1991, PARIS FR Seiten 75 - 84 DE VIRVILLE 'la télégestion de chaufferies'
- AUTOMATISIERUNGSTECHNISCHE PRAXIS - ATP Bd. 33, Nr. 11, November 1991, MUNCHEN DE Seiten 571 - 579 KEUCHEL 'asterega-ein adaptives system zum regeln und steuern von heizungs- und klimaanlagen'

## Beschreibung

Die Erfindung betrifft eine Einrichtung zur Steuerung, Regelung und Überwachung von Heizungssystemen, insbesondere von Fernwärmeanlagen, unter Verwendung einer beim Fernwärmekunden installierten Fernwärme-Übergabestation mit einem Wärmeverbrauchs-Meßgerät sowie mikroprozessorgesteuerten elektronischen Baugruppen, welche mit den für die Steuerung, Regelung und Überwachung von Heizungs- und Brauchwasseranlagen und dgl. ausgerichteten Programmen versehen und mit den für die Messung von Außentemperaturen, Raumtemperaturen und Temperaturen sowie Dürchflußmengen des Wärmeträgers und des Brauchwassers, und dgl. nötigen peripheren Meßgeräten verbunden sind.

Die Hauptforderung an moderne Heizsysteme besteht in der Erzielung energieökonomischer Effekte. In dieser Hinsicht hat Fernwärme das Image einer modernen - und auch umweltfreundlichen - Energieform. Trotz eines relativ hohen Zufriedenheitsgrades der Kunden weist das Fernwärmesystem einige gravierende Schwachstellen auf.

Es sind anschlußfertige Arten von Fernwärme-Übergabestationen bekannt, welche mit den zur Steuerung und Regelung von Heizungs- und Brauchwasseranlagen benötigten Komponenten ausgerüstet sind. Damit können für den Endverbraucher wichtige Regelfunktionen, beispielsweise gleitende Nachtabsenkung, witterungsbedingte Vorlauftemperaturregelung (d. h., die Wärmeabgabe richtet sich nach der individuell eingestellten Heizkurve), gleitende Begrenzung der Rücklauftemperatur in Abhängigkeit von der Außentemperatur, usw. gut beherrscht werden.

Weiters sind Mikroprozessorregler mit Fernheizungsprogramm am Markt, welche zusätzlich auch die von den Fernkraftwerken geforderten Überwachungs-, Begrenzungs- und Sicherheitsfunktionen erfüllen. Mit Hilfe des Mikroprozessors werden alle wichtigen Komponenten einer Heizungsanlage erfaßt und wichtige Regel funktionen koordiniert. Damit können aber auch unterschiedliche Speicherverhalten von Gebäuden berücksichtigt werden.

Ferner sind Mikroprozessorregler bekannt, welche eingegebene Programme aufweisen, mit denen verschiedenartige Anlagensysteme regelbar sind. Dabei erfolgt die konkrete Anpassung des Reglers an die verschiedenartigen Anlagensysteme beispielsweise mit Steckplatten. Mittels eines Bediengerätes kann der Benutzer sowohl Auskünfte einholen als auch Anweisungen eingeben. Zudem ist die Möglichkeit vorgesehen, manuell einzugreifen, um allenfalls sich ergebende Not-Eingriffe durchführen zu können.

Bei anderen Fabrikaten von Fernwärmereglern ist auch die Funktion der Fensterlüftungs-Erkennung eingebaut. Dadurch wird verhindert, daß unnötige Korrekturberechnungen durchgeführt werden müssen. Mittels adaptiver Optimierung paßt sich dieser Regler automatisch an das thermische Verhalten des zu beheizenden Gebäudes an. Mittels Begrenzerfunktionen wird versucht, einen energiesparenden Betrieb zu fahren und Anlagenschutz zu gewährleisten. Auf einem digitalen Display können alle Betriebszustände und Einstellungen angezeigt werden.

Es sind also mit den herkömmlichen Fernwärme-Übergabestationen die Heizungs- und Brauchwasseranlagen des Endverbrauchers regelungs- und steuerungstechnisch gut erfaßt, jedoch handelt es sich dabei um jeweils isoliert nur für den jeweiligen Endverbraucher agierende Einrichtungen ohne effektive Rückmeldefunktionen für den Fernwärmeerzeuger.

Aufgabe der Erfindung ist es daher, ein System zu schaffen, welches - unter Beibehaltung der individuellen Regelungs- und Steuerungsmöglichkeiten für die Fernwärme-Endverbraucher - den Fernwärmeerzeuger in die Lage versetzt, die Energieaufbringung-genau dem jeweils aktuellen Energiebedarf anzupassen und somit die vorhandene Wärmeenergie optimal auszunützen.

Die Aufgabe wird durch die Erfindung gelöst. Diese ist dadurch gekennzeichnet, daß im Wärmeverbrauchs-Meßgerät ein ausfallsicherer Speicher zur Speicherung der Verbrauchswerte vorgesehen ist, und daß die elektronischen Baugruppen als frei programmierbare Module ausgelegt sind, und daß das Fernwärme-Meßgerät und die elektronischen Baugruppen über ein Datenkommunikationsmodul miteinander verbunden sind, wobei eine Beschränkung auf bestimmte Datenbereiche die Rückwirkungsfreiheit auf den Betrieb des Wärmeverbrauchs-Meßgerätes sicherstellt, und daß jeweils mehrere Übergabestationen zu einer Stations-Gruppe zusammengefaßt sind, und daß die Stationen mittels ihres Datenkommunikationsmoduls über jeweils einen ersten Datenbus der zugehörigen Gruppe mit jeweils einem Datenkonzentrator verbunden sind, und daß die Datenkonzentratoren über einen jeweils zweiten Datenbus mit einem in einer Zentrale vorgesehenen zentralen Leitrechner verbunden sind, und daß der zentrale Leitrechner über ein Backbone-LAN mit einem Energiemanagement-Rechner verbunden ist, und daß der zentrale Leitrechner ein Programm zur Durchführung von Abfragen, (Fern-) Diagnosen und Wertvorgaben sowie zur grafischen Darstellung von Test- und Stördaten in Form von Farbgrafikbildern und Meßkurven sowohl für die Fernwärmeerzeugung als auch für die Fernwärme-Übergabestationen aufweist, und daß der Energiemanagement-Rechner ein Programm zur Energieoptimierung aufweist.

Die gravierende Neuerung besteht darin, daß es mit der erfindungsgemäßen Einrichtung für den Fernwärmeerzeuger erstmals möglich ist, aufgrund der von den Fernwärme-Übergabestationen über das Datennetz dem zentralen Leitrechner übermittelten Informationen die Energieaufbringung dem jeweils aktuellen Energiebedarf genau anzupassen. Auf diese Weise wird die vorhandene Energie optimal ausgenutzt. Dies bringt sowohl für den Fernwärmeerzeuger als auch für den -abnehmer wirtschaftliche Vorteile. Weiters ist vorteilhaft, daß die individuelle Steuerung, Regelung und Überwachung von der erfindungsgemäßen Einrichtung unterstützt wird.

Eine Weiterbildung der Erfindung sieht vor, daß die Verbindung zwischen dem Datenkommunikationsmodul und dem ersten Datenbus mittels eines steckbaren Anschlußstückes durchgeführt ist, und daß an das Datenkommunikationsmodul wahlweise der erste Datenbus oder ein Diagnoserechner anschließbar ist.

Diese erfindungsgemäße Weiterbildung gewährleistet ein rasches und unproblematisches Anschließen eines Diagnoserechners vorort.

Ein zusätzliches Merkmal der Erfindung sieht vor, daß die elektronischen Baugruppen in den Fernwärme-Übergabestationen mit EPROMs oder EEPROMs ausgestattet sind, und daß im zentralen Leitrechner ein Rechnermodul für das Laden optimierter Programme über das Datennetz in diese EPROMs oder EEPROMs vorgesehen ist.

Dies ist vorteilhaft, weil damit die Möglichkeit besteht, di Steuerungs-, Regelungs- und Überwachungsprogramme für die Fernwärme-Abnehmer laufend zu verbessern und zentral zu laden.

In einer Ausgestaltung der Erfindung ist die Kopplung zwischen den jeweils zweiten Schnittstellen der Datenkonzentratoren und der ersten Schnittstelle des zentralen Leitrechners als Modem ausgeführt.

Der Vorteil dieser Ausgestaltung besteht darin, daß gegebenenfalls eine entsprechende vorhandene Leitungsverbindung mitbenützt werden kann. Von dieser Möglichkeit wird wohl hauptsächlich im Falle großer Entfernungen zwischen Datenkonzentrator und zentralem Leitrechner Gebrauch gemacht werden.

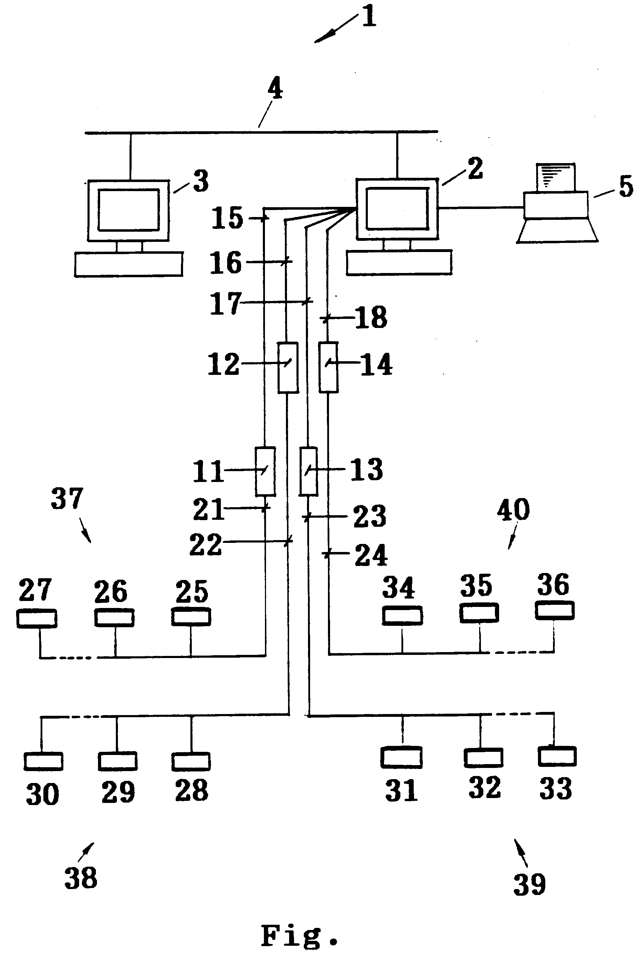

Anhand eines in der Zeichnung dargestellten Ausführungsbeispieles soll die Erfindung näher erläutert werden. Die Fig. zeigt, in Form eines Blockschaltbildes, die für die erfindungsgemäße Steuerungs-, Regelungs- und Überwachungseinrichtung relevanten Komponenten eines Fernwärmenetzes.

In einer Zentrale 1 im Bereich des Fernwärmeerzeugers sind ein zentraler Leitrechner 2 und ein Energiemanagement-Rechner 3 über ein Backbone-LAN 4 miteinander verbunden. Vier Datennetzkonzentratoren 11, 12, 13, 14 sind über eine jeweils erste Datenleitung 21, 22, 23, 24 mit jeweils einer Gruppe 37, 38, 39, 40 von Fernwärme-Übergabestationen verbunden. Jede dieser Gruppen 37, 38, 39, 40 besteht aus einer ersten, zweiten und n-ten Station 25, 26, 27 bzw. 28, 29, 30 bzw. 31, 32, 33 bzw. 34, 35, 36. Über eine jeweils zweite Datenleitung 15, 16, 17, 18 stehen die Datenkonzentratoren 11, 12, 13, 14 mit dem zentralen Leitrechner 2 in Verbindung. Die Fernwärme-Übergabestationen 25, 26, 27 28, 29, 30 31, 32, 33 34, 35, 36 sind universelle Steuerungs- und Regelungssysteme, welche, wie bekannt, speziell auf die Anforderungen von Fernwärme-Hausstationen ausgelegt sind. Zu den Aufgaben dieses Systems gehören die Messung der verbrauchten Wärmemenge - sie erfolgt über ein elektronisches Rechenwerk -, die Steuerung und Regelung der Heizungs- und Warmwassersysteme, sowie die Kommunikation über das aus den Datenleitungen 15, 16, 17, 18, 21, 22, 23, 24 und den Datenkonzentratoren 11, 12, 13, 14 bestehende Datennetz. Die besagten Funktionen sind im vorliegenden Fall auf einer mikroprozessorgesteuerten Systemplatine in der Fernwärme-Übergabestation zusammengefaß und werden dort per Programm bearbeitet. Die elektronischen Baugruppen für die Steuerung, Regelung und Überwachung von Heizungs- und Brauchwasseranlagen und dgl. sind als frei programmierbare Module ausgelegt. Es steht ein umfangreicher Katalog an regelungs- und steuerungstechnischen Bausteinen zur Verfügung, woraus sich, zusammen mit der Möglichkeit der freien Verschaltung, für den Anwender eine hohe Flexibilität beim Aufbau des Systems ergibt.

Konkret wird im vorliegenden Fall eine witterungsbedingte Vorlauftemperaturregelung durchgeführt. Zu diesem Zweck steuert die aktuelle bzw. zeitlich gemittelte Außentemperatur über eine Heizkurve die jeweils adäquate Vorlauftemperatur. Bei mehreren Gebäuden wird die für jedes Gebäude optimale Heizkurve vom Regler selbsttätig ermittelt. Für die Rücklauftemperaturbegrenzung ist vorgesehen, daß der entsprechende Grenzwert als konstant oder gleitend nach der Außentemperatur festgelegt werden kann.

Was den ermittelten Wärmeverbrauch betrifft, so werden die einzelenen Verbrauchswerte ausfallsicher gespeichert und können vom Fernwärmekunden auf einer örtlichen Anzeige abgefragt werden. Da alle Komponenten der Fernwärme-Übergabestationen 25, 26, 27 28, 29, 30 31, 32, 33 34, 35, 36 über das Datennetz mit dem zentralen Leitrechner 2 in Verbindung stehen, können die Verbrauchswerte auch von der Ferne abgelesen werden. In zeitlich periodischen Abständen - üblicherweise wird das einmal pro Monat sein - erzeugt die erfindungsgemäße Einrichtung ein Verbrauchsprotokoll. Dieses kann direkt für die Verrechnung verwendet werden. Damit erübrigen sich sowohl ein Ablesen der Wärmezähler vorort als auch die damit verbundenen händischen Aufzeichnungen.

Bei einer Brauchwasseranforderung schaltet der Regler vom Heizbetrieb in den Brauchwasserladebetrieb um. Die Wassertemperatur wird dann exakt auf den gewünschten Wert geregelt. Um ein Abkühlen der Heizung zu verhindern, wird zwischenzeitlich immer wieder auf "Heizen" geschaltet. Über ein Zeitprogramm kann die Brauchwasserladung auf bestimmte Zeitbereiche eingeschränkt werden.

Es ist eine Temperaturspreizung-Minimalbegrenzung vorgesehen. Kleine Temperaturdifferenzen zwischen Vor- und Rücklauf bewirken größere Meßfehler des Wärmezählers. Aus diesem Grund schließt hier die Fernwärme-Übergabestation 25, 26, 27 28, 29, 30 31, 32, 33 34, 35, 36 das Regelventil bereits ab einer gewissen Minimalspreizung. Liegt wieder ein höherer Wärmebedarf vor, dann wird das Ventil spontan auf eine Stellung über den Minimalwert hinaus geöffnet.

Die einzelnen Fernwärme-Übergabestationen 25, 26, 27 bzw. 28, 29, 30 bzw. 31, 32, 33 bzw. 34, 35, 36 stehen über das Datennetz mit den Konzentratoren 11 bzw. 12 bzw. 13 bzw. 14 in Verbindung. Das Datennetz ist als Bus ausgeführt; eine einfache, "chaotische" Verbindung der Komponenten untereinander ist möglich. Ein derartiges Datennetz kann aus einigen Hunderten Teilnehmern bestehen. Die Busleitung ist vieradrig, sie darf mehrere Kilometer betragen, sollte aber die Größenordnung von etwa zehn Kilometern nicht überschreiten. Bei großen Netzen oder mehr als etwa 250 Fernwärme-Übergabestationen ist eine Aufteilung in mehrere Teilnetze zweckmäßig. Die Datenkonzentratoren 11, 12, 13, 14 besitzen neben einer Busschnittstelle für die Fernwärme-Übergabestationen 25, 26, 27, 28, 29, 30, 31, 32, 33, 34, 35, 36 noch eine zweite, günstigerweise eine V24-Schnittstelle für die Kopplung mit dem zentralen Leitrechner 2. Bei großen Entfernungen kann diese Verbindung auch als Modemstrecke ausgelegt werden. Das Übertragungsprotokoll beruht auf einem Master/Slave-Prinzip. Der Datennetzkonzentrator hat dabei die Aufgabe, ständig alle Fernwärme-Übergabestationen 25, 26, 27, 28, 29, 30, 31, 32, 33, 34, 35, 36 der Reihe nach abzufragen und auf diese Weise zu gewährleisten, daß Störungen oder Ausfälle einzelner Stationen rasch gemeldet werden. Alle Telegramme am Netz sind mit einem Prüfcode (CRC16) versehen und ermöglichen damit eine hohe Fehlererkennung (Hamming-Distance = 4).

Es werden also alle wesentlichen Informationen des Fernwärmenetzes über das Datennetz und die Datenkonzentratoren 11, 12, 13, 14 an den zentralen Leitrechner 2 übertragen. Der Leitrechner 2 hat im wesentlichen fünf Aufgaben zu bewerkstelligen.

Die erste dieser Aufgaben ist jene der Informationsanzeige. Wesentlich dabei ist, daß der Bildinhalt auf den Informationsbedarf des Operators abgestimmt ist und daß die Information entsprechend strukturiert angeboten wird. Immerhin sind, selbst bei einem Netz von nur mittlerer Größe - beispielsweise etwa 300 Fernwärme-Übergabestationen -, Datenmengen von etwa 10.000 Signalen zu bewältigen. Für eine übersichtliche optische Darstellung ist es zweckmäßig, eine Bildhierachie zu wählen. Diese Hierachie kann beispielsweise folgendermaßen beschaffen sein (von oben nach unten): Netzübersicht - Strangbilder - Straßenbilder - Stationsbilder. Im Netzübersichtsbild und in den Strangbildern werden nur Summenzustände (Status der Datenverbindung und der Funktionsstatus) dargestellt. Die Aktualisierung dieser Bildpunkte erfolgt spontan; die Übertragung der entsprechenden Werte wird von jeder Fernwärme-Übergabestations-Komponente angereizt. Die Bildpunkte der Stationsbilder hingegen werden nur dann aktualisiert, wenn das Bild aufgeschaltet ist.

Die nächste Aufgabe des zentralen Leitrechners 2 besteht in der Speicherung und Anzeige von Meßkurven (Trends). Meßwerte, die zyklisch abgefragt und an den zentralen Leitrechner 2 gesendet werden, können über lange Zeiträume gespeichert und als Kurvenverläufe am Bildschirm angezeigt werden. Die Speicherung der Werte erfolgt ausfallsicher auf Festpallte. Die Dauer einer Aufzeichnung kann sich - wenn beispielsweise Stundenwerte eingetragen werden - über ein Jahr erstrecken. Solche Meßwerte für Trends könnten z. B. der Wärmeverbrauch des gesamten Netzes, der Wärmeverbrauch einzelner Stationen, die Außentemperatur und die Rücklauftemperatur sein.

Die Ausgabe von Meldeprotokollen sind eine weitere Aufgabe des zentralen Leitrechners 2. Alle Ereignisse (also beispielsweise Ausfall der Datenverbindung, Funktionsstörung) können an einem Drucker 5 in Form eines Meldeprotokolls ausgegeben werden. Alle Meldungen werden mit Echtzeit gestempelt, so daß Störfälle auch später noch rekonstruiert werden können.

Die Messung des Wärmeverbrauches ist auch eine der Aufgaben des zentralen Leitrechners 2. In jeder Fernwärme-Übergabestations-Komponente ist ausfallsicher der Energieverbrauch des jeweiligen Fernwärmeanschlusses gespeichert. Dieser Wert kann vom zentralen Leitrechner 2 monatlich abgefragt und sodann in einem Protokoll als Monatsabrechnung am Drucker 5 ausgegeben werden. Ein Ablesen der Verbrauchswerte vorort und die händische Aufzeichnung der Werte erübrigen sich. Mit der monatlichen Fernablesung liegt außerdem eine wesentlich feinere zeitliche Rasterung der Verbrauchswerte vor.

Der zentrale Leitrechner 2 ist zudem auch Bediengerät für Wertvorgaben, also für die Vorgabe von Parametern und Sollwerten. Die Eingabe erfolgt entweder direkt über die Tastatur oder indirekt über ein Grafikbild.

Für die Wartung und Diagnose vorort ist ein Diagnoserechner vorgesehen, günstigerweise ein Laptop-PC. Die entsprechende Fernwärme-Übergabestations-Komponente wird im Diagnosefall abgekoppelt und mit dem Diagnoserechner verbunden. Für die Abfrage der Werte kann auch hier das Stationsbild verwendet werden. Alle nicht im Stationsbild angezeigten Werte können einzeln über Lesebefehl abgefragt werden.

## Patentansprüche

1. Einrichtung zur Steuerung, Regelung und Überwachung von Heizungssystemen, insbesondere von Fernwärmeanlagen, unter Verwendung einer beim Fernwärmekunden installierten Fernwärme-Übergabestation mit einem Wärmeverbrauchs-Meßgerät sowie mikroprozessorgesteuerten elektronischen Baugruppen, welche-mit den für die Steuerung, Regelung und Überwachung von Heizungs- und Brauchwasseranlagen und dgl. ausgerichteten Programmen versehen und mit den für die Messung von Außentemperaturen, Raumtemperaturen und Temperaturen sowie Durchflußmengen des Wärmeträgers und des Brauchwassers, und dgl. nötigen peripheren Meßgeräten verbunden sind, **dadurch gekennzeichnet**, daß im Wärmeverbrauchs-Meßgerät ein ausfallsicherer Speicher zur Speicherung der Verbrauchswerte vorgesehen ist, und daß die elektronischen Baugruppen als frei programmierbare Module ausgelegt sind, und daß das Fernwärme-Meßgerät und die elektronischen Baugruppen über ein Datenkommunikationsmodul miteinander verbunden sind, wobei eine Beschränkung auf bestimmte Datenbereiche die Rückwirkungsfreiheit auf den Betrieb des Wärmeverbrauchs-Meßgerätes sicherstellt, und daß jeweils mehrere Übergabestationen (25, 26, 27 bzw. 28, 29, 30 bzw. 31, 32, 33 bzw. 34, 35, 36) zu einer Stations-Gruppe (37, 38, 39, 40) zusammengefaßt sind, und daß die Stationen (25, 26, 27, 28, 29, 30, 31, 32, 33, 34, 35, 36) mittels ihres Datenkommunikationsmoduls über jeweils einen ersten Datenbus (21, 22, 23, 24) der zugehörigen Gruppe (37, 38, 39, 40) mit jeweils einem Datenkonzentrator (11, 12, 13, 14) verbunden sind, und daß die Datenkonzentratoren (11, 12, 13, 14) über einen jeweils zweiten Datenbus mit einem in einer Zentrale (1) vorgesehenen zentralen Leitrechner (2) verbunden sind, und daß der zentrale Leitrechner (2) über ein Backbone-LAN (4) mit einem Energiemanagement-Rechner (3) verbunden ist, und daß der zentrale Leitrechner (2) ein Programm zur Durchführung von Abfragen, (Fern-) Diagnosen und Wertvorgaben sowie zur grafischen Darstellung von Test- und Stördaten in Form von Farbgrafikbildern und Meßkurven sowohl für die Fernwärmeerzeugung als auch für die Fernwärme-Übergabestationen (25, 26, 27, 28, 29, 30, 31, 32, 33, 34, 35, 36) aufweist, und daß der Energiemanagement-Rechner (3) ein Programm zur Energieoptimierung aufweist.

2. Einrichtung nach Anspruch 1, **dadurch gekennzeichnet**, daß die Verbindung zwischen dem Datenkommunikationsmodul und dem ersten Datenbus (21, 22, 23, 24) mittels eines steckbaren Anschlußstückes durchgeführt ist, und daß an das Datenkommunikationsmodul wahlweise der erste Datenbus (21, 22, 23, 24) oder ein Diagnoserechner anschließbar ist.

3. Einrichtung nach Anspruch 1 oder 2, **dadurch** **gekennzeichnet**, daß die elektronischen Baugruppen in den Fernwärme-Übergabestationen (25, 26, 27, 28, 29, 30, 31, 32, 33, 34, 35, 36) mit EPROMs oder EEPROMs ausgestattet sind, und daß im zentralen Leitrechner (2) ein Rechnermodul für das Laden optimierter Programme über das Datennetz in diese EPROMs oder EEPROMs vorgesehen ist.

4. Einrichtung nach einem der Ansprüche 1 bis 3, **dadurch** **gekennzeichnet**, daß die Kopplung zwischen den Datenkonzentratoren (11, 12, 13, 14) und dem zentralen Leitrechner (2) als Modem ausgeführt ist.

## Claims

1. Device for controlling, regulating and monitoring heating systems, especially remote heating installations, with utilization of a remote heat transfer station, installed at the remote client served in remote heating and equipped with a heat consumption measuring device and also equipped with microprocessor controlled electronic components that are equipped of programs designed for the controlling, regulating and monitoring of heating and industrial water installations, and analogous, and connected to measuring devices provided to measure external temperatures, ambient temperatures and temperatures as well as debits of the thermal fluid and industrial water and the analogous, characterized in that in the heat consumption measuring device of heat is provided a memory safe against breakdowns destined to store values of consumption, and in that the electronic components are designed as free programming modules, and that the heat consumption measuring device and the electronic components are connected together by a data communication module, with a limitation to determined data ranges insuring a reaction-free functioning of the heat consumption measuring device, and that a plurality of transfer stations (25, 26, 27, respectively 28, 29, 30, respectively 31, 32, 33, respectively 34, 35, 36) are regrouped in a station group (37, 38, 39, 40), and that the stations (25, 26, 27, 28, 29, 30, 31, 32, 33, 34, 35, 36) are connected respectively to a data concentrator (11, 12, 13, 14) by means their data communication module through a first date bus, respectively, of the corresponding group (37, 38, 39, 40), ant that the data concentrators (11, 12, 13, 14) are connected each by a second data bus, to a central director computer (2) provided in a central station (1), and that the central director computer (2) is connected by a backbone-LAN to a energy management oriented computer, and that the central director computer (2) presents a program to undertake interrogations, (remote) diagnosiss, and attributions of values as well as to undertake a graphic representation of test and perturbation data, under the form of graphic images in color, so concerning the remote heat generation, that equally concerning remote heat transfer station (25, 26, 27, 28, 29, 30, 31, 32, 33, 34, 35, 36), and the the energy management oriented computer contains a program of optimisation of energy.

2. Device according to claim 1, characterized in that the connection between the data communication module and the first data bus (21, 22, 23, 24) is provided by means an plugable connection element, and in that either the first data bus (21, 22, 23, 24) or a diagnosis computer can be connected on the data communication module, to the choice.

3. Device according to claim 1 or 2, characterized in that the electronic components situated in the remote heat transfer stations (25, 26, 27, 28, 29, 30, 31, 32, 33, 34, 35, 36) are equipped of EPROMs or EEPROMs, and in that in the central director computer (2) is mounted a calculation module designed for the loading of optimized programs through the data network system, in these EPROMs or EEPROMs.

4. Device according to one of claims 1 to 3, characterized in that the coupling between the data concentrators (11, 12, 13, 14) and the central director computer (2) is implemented by modem.

## Revendications

1. Dispositif de commande, de régulation et de surveillance de systèmes de chauffage, en particulier d'installations de chauffage à distance, avec utilisation d'un poste de transfert pour chaleur à distance, installé chez le client desservi en chaleur à distance et équipé d'un appareil de mesure de consommation de chaleur, ainsi qu'avec des composants électroniques, commandés par micro-processeur et pourvus de programmes conçus pour la commande, la régulation et la surveillance d'installations de chauffage et d'eau industrielle et analogues et reliés aux appareils de mesure périphériques nécessaires pour mesurer les températures extérieures, les températures ambiantes et les températures ainsi que les débits du fluide caloporteur et de l'eau industrielle et analogue, caractérisé en ce que, dans l'appareil de mesure de consommation de chaleur, est prévue une mémoire à sécurité contre les pannes destinée à stocker les valeurs de consommation, et en ce que les composants électroniques sont conçus sous forme de modules à programmation libre, en ce que l'appareil de mesure de chaleur à distance et les composants électroniques sont reliés ensemble par un module de communication de données, une limitation à des plages de données déterminées assurant l'exemption de rétroaction au fonctionnement de l'appareil de mesure de consommation de chaleur, et en ce que plusieurs postes de transfert (25, 26, 27, respectivement 28, 29, 30, respectivement 31, 32, 33, respectivmeent 34, 35, 36) sont regroupées en un groupe de postes (37, 38, 39, 40), et en ce que les postes (25, 26, 27, 28, 29, 30, 31, 32, 33, 34, 35, 36) chacun sont reliées à un concentrateur de données (11, 12, 13, 14) au moyen de leur module de communication de données, par l'intermédiaire respectivement d'un premier bus de données (21, 22, 23, 24) du groupe (37, 38, 39, 40) afférent, et en ce que les concentrateurs de données (11, 12, 13, 14) sont reliés chacun, par un deuxième bus de données, à un ordinateur directeur central (2) prévu dans un poste centrale (1), et en ce que l'ordinateur directeur central (2) est relié par un réseau local dorsal backbone-LAN (4) à un ordinateur de gestion d'énergie (3), et en ce que l'ordinateur directeur central (2) présente un programme pour effectuer des interrogations, des diagnostics (à distance) et des attributions de valeurs, ainsi que pour effectuer une représentation graphique des données de test et de perturbations, sous la forme d'images à graphiques en couleur et de courbes de mesure, tant concernant la production de chaleur à distance, qu'également concernant les postes de transfert de chaleur à distance (25, 26, 27, 28, 29, 30, 31, 32, 33, 34, 35, 36), et en ce que l'ordinateur de gestion d'énergie (3) contient un programme d'optimisation de l'énergie.

2. Dispositif selon la revendication 1, caractérisé en ce que la liaison entre le module de communication de données et le premier bus de données (21, 22, 23, 24) est réalisée au moyen d'un élément de raccordement embrochable, et en ce que sur le module de communication de données peut être raccordé, au choix, le premier bus de données (21, 22, 23, 24) ou bien un ordinateur de diagnostic.

3. Dispositif selon la revendication 1 ou 2, caractérisé en ce que les composants électroniques situés dans les postes de transfert de chaleur à distance (25, 26, 27, 28, 29, 30, 31, 32, 33, 34, 35, 36) sont équipés d'une pluralité d'EPROM ou d'EEPROM, et en que, dans l'ordinateur directeur central (2) est prévu un module de calcul pour le chargement de programmes optimisés, par l'intermédiaire du réseau informatique, dans ces EPROM ou EEPROM.

4. Dispositif selon l'une des revendications 1 à 3, caractérisé en ce que le couplage entre les concentrateurs de données (11, 12, 13, 14) et l'ordinateur directeur central (2) est réalisé par modem.
